# EUROPÄISCHE PATENTSCHRIFT

(11) **EP 1 782 974 B1**
(45) Veröffentlichungstag und Bekanntmachung des Hinweises auf die Patenterteilung: **21.09.2011**
(21) Anmeldenummer: 06013701.5
(22) Anmeldetag: 01.07.2006
(51) Int. Cl.: B60D 5/00, B62D 47/02, B61D 17/22

(54) **Übergang zwischen zwei gelenkig miteinander verbundenen Fahrzeugen mit einem Übergangsboden**
Passageway with a floor between articulated vehicles
Intercommunication entre deux véhicules articulés comportant un plancher

(30) Priorität: 08.11.2005 DE 102005053207
(43) Veröffentlichungstag der Anmeldung: 09.05.2007
(73) Patentinhaber: Hübner GmbH, 34123 Kassel (DE)
(72) Erfinder: Goebels, André, 34134 Kassel (DE); Britzke, Ingo, 34123 Kassel (DE); Busch, Thomas, 34359 Reinhardshagen (DE)
(74) Vertreter: Walther, Walther & Hinz GbR

(56) Entgegenhaltungen:
- EP-A- 0 806 539
- EP-A- 0 824 171
- EP-A1- 0 207 682
- EP-A1- 0 217 080
- EP-A1- 0 241 116
- EP-A2- 0 331 121
- DE-A1- 4 101 730
- GB-A- 1 387 141
- GB-A- 2 193 983
- US-A1- 2002 112 435

## Beschreibung

Die vorliegende Erfindung betrifft einen Übergang zwischen zwei gelenkig miteinander verbundenen Fahrzeugen eines schienengebundenen Gelenkfahrzeugs mit einer Gliederbrücke. Grundsätzlich wird unterschieden zwischen schienengebundenen Gelenkfahrzeugen, wie z. B. Straßenbahnzügen und Eisenbahnzügen oder straßengebundenen Gelenkfahrzeugen, wie insbesondere Gelenkomnibussen. Die derart miteinander verbundenen Fahrzeugteile, beispielsweise eines Schienenfahrzeuges oder eines Gelenkomnibusses weisen einen Übergang auf, der mindestens einen Balg umfasst, der sowohl den Boden und gegebenenfalls auch das Gelenk tunnelförmig umgibt, um Personen den Übergang von einem Fahrzeugteil zum anderen Fahrzeugteil zu ermöglichen, ohne dass diese Witterungseinflüssen ausgesetzt sind. In diesem Zusammenhang ist anzumerken, dass die Bälge als Falten- oder als Wellenbälge ausgebildet sind, wobei insbesondere Wellenbälge bei schienengebundenen Fahrzeugen zum Einsatz kommen und Faltenbälge bei Gelenkomnibussen.

Bei schienengebundenen Fahrzeugen, wie insbesondere Eisenbahnzügen ist der Boden als Gliederbrücke ausgebildet. Derartige Gliederbrücken sind im Stand der Technik hinreichend bekannt, wobei z. B. auf die EP 0 669 243 B1 ,die EP 0 854 813 B1oder auch die EP 331 121 A2 hinzuweisen ist. Derartige Gliederbrücken bestehen aus wechselweise angeordneten Gleit- und Trittgliedern. Die Gleitglieder sind aus Hartkunststoff ausgebildet, wohingegen die Trittglieder, die im Querschnitt ein Doppel-T-förmiges Profil aufweisen, aus Metall und hier insbesondere aus Aluminium hergestellt sind.

Aus der EP 241 116 B1 ist bekannt, auf dem Boden eines Schienenfahrzeugs ein Flammschutzmittel vorzusehen, das wasserabspaltend ausgebildet ist. Im Einzelnen ist hierbei vorgesehen, dass auf der Oberseite eines Übergangsbodens eine erste Schicht vorgesehen ist, die aus einem Gummi bestehen soll, der ein Hydroxid oder ein anderes Material aufweist, das unter Wärme wasserabspaltend ist. Nachteilig hierbei ist, dass bei einer Wärmeeeinwirkung von unten auf den Boden der Gummi oben anfängt zu kohlen, was mit einer erheblichen Rauchentwicklung verbunden ist. Dieses Verkohlen wird nicht dadurch unterbunden, dass der Gummi wasserabspaltende Mittel aufweist.

Insbesondere bei Schienenfahrzeugen besteht nunmehr die Forderung, dass im Bereich des Übergangs der Boden einen gewissen Widerstand gegen die Einwirkung von Feuer aufweist, also flammschutzhemmend ausgebildet ist. In diesem Zusammenhang ist man dazu übergegangen, die DIN-ISO 834, die eigentlich für Gebäude geschaffen wurde, auch auf die Böden von Übergängen zwischen gelenkig miteinander verbundenen Fahrzeugen anzuwenden. Entsprechend dieser ISO 834 oder auch die NFPA 130 (USA) oder ASTME 119 wird schlussendlich vorgeschrieben, dass ein solcher Boden eines Übergangs bei Wärmeeinwirkung von unten über eine bestimmte Zeit einer bestimmten Belastung Stand halten muss, wobei darüber hinaus die Temperatur auf der Oberseite des Bodens nicht 140° C bzw. 180° C über der Ausgangstemperatur des Bodens liegen darf.

Zur Bereitstellung eines Bodens, der diesen Prämissen genügt, ist erfindungsgemäß vorgesehen, dass die Gliederbrücke abwechselnd angeordnete Tritt- und Gleitglieder aufweist, wobei die Gleitglieder aus einem Hartkunststoff herstellbar sind und die Trittglieder aus einem metallischen Werkstoff bestehen, wobei die Trittglieder auf der Unterseite Taschen aufweisen, wobei als plattenförmige Elemente, die mit Flammschutzmittel ausgerüstet sind, durch die Taschen einschiebbar aufnehmbar sind. Des Weiteren kann nach einem Merkmal der Erfindung vorgesehen sein, dass die Trittglieder, die im Querschnitt nach Art eines Doppel-T-Profils ausgebildet sind, am Steg ebenfalls Taschen zur Aufnahme von Flammschutzmitteln aufweisen. Auch in diesem Bereich können somit plattenförmige Flammschutzmittel eingeschoben werden. Es hat sich in diesem Zusammenhang herausgestellt, dass es ausreichend ist, wenn die metallischen Trittglieder mit derartigen Isoliermaterialien oder auch Flammschutzmitteln versehen sind; es ist nicht erforderlich, dass die Gleitglieder, die - wie bereits ausgeführt - aus Kunststoff hergestellt sind, ebenfalls mit derartigen Flammschutzmitteln versehen sind. Dies deshalb, weil der Kunststoff als solcher bereits isolierend wirkt. Nichtsdestotrotz besteht natürlich die Möglichkeit, auch die Kunststoffglieder mit derartigen Flammschutzmitteln auszurüsten.

Nach einem besonderen Merkmal der Erfindung ist vorgesehen, dass das Isoliermaterial oder Flammschutzmittel unter Wärmeeinwirkung sein Volumen vergrößert und/oder, dass das Isoliermaterial oder Flammschutzmittel unter Wärmeinwirkung wasserabspaltend ausgebildet ist. Durch eine Volumenvergrößerung, die mit einer Porenbildung des Materials einhergeht, wird eine höhere Isolierwirkung erreicht. Ist das Isoliermaterial oder das Flammschutzmittel zusätzlich noch wasserabspaltend, d. h. das Mittel setzt Wasser frei während der Wärmeinwirkung, beispielsweise durch eine Flamme, dann wird hierdurch zusätzliche Verdunstungskälte erzeugt, was wiederum bewirkt, dass die Temperatur über einen bestimmten Zeitraum die vorgegebenen Werte nicht überschreitet.

In diesem Zusammenhang ist im Einzelnen vorgesehen, dass das Isoliermaterial oder Flammschutzmittel ein Wasserglas ist, wobei das Wasserglas unter Einwirkung von Hitze nicht nur Wasser abspaltet, sondern darüber hinaus sein Volumen unter Porenbildung vergrößert. Darüber hinaus kann als Isoliermaterial oder Flammschutzmittel ein Mittel auf der Basis von Ammoniumpolyphosphaten und/oder Dizyanamid Verwendung finden. Beide Stoffe sind intumeszent, d. h. quellend oder auch porenbildend, aber nicht wasserabspaltend . Anhand der Zeichnungen wird die Erfindung nachstehend beispielhaft näher erläutert.
- Figur 1: zeigt eine Ansicht von oben auf eine Gliederbrücke eines Übergangs mit einem Faltenbalg mit angedeuteten Fahrzeugteilen;

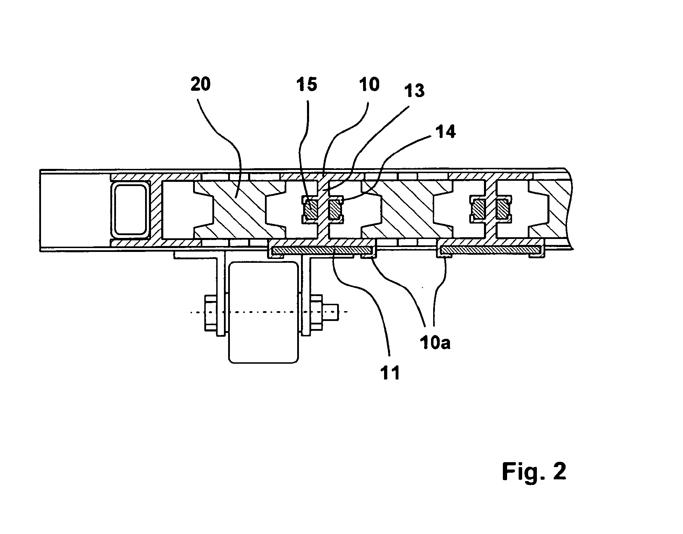

- Figur 2: zeigt den Ausschnitt aus einer Gliederbrücke im Schnitt;

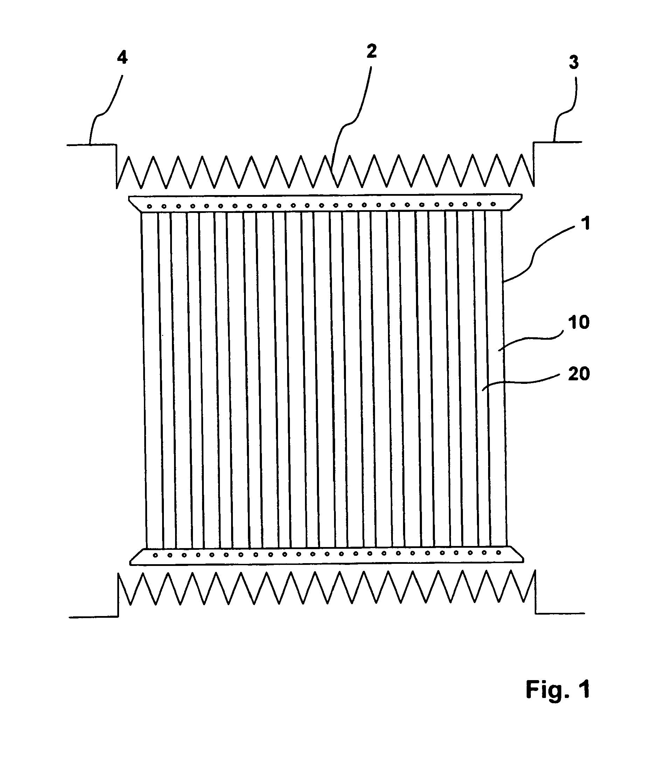

Die gemäß Figur 1 mit 1 bezeichnete Gliederbrücke ist von einem Faltenbalg 2 umgeben. Die beiden zu beiden Seiten der Gliederbrücke schematisch angedeuteten Fahrzeugteile des Gelenkfahrzeugs sind mit 3 und 4 gekennzeichnet. Die Gliederbrücke 1 besteht aus einzelnen Trittgliedern 10 und Gleitgliedern 20. Die Trittglieder 10 besitzen auf ihrer Unterseite den taschenförmigen Einschub 10a zur Aufnahme einer Platte 11 aus Flammschutzmaterial. Auch der Steg 13 besitzt zu beiden Seiten entsprechende Taschen 14 zur Aufnahme von Flammschutzmitteln und zwar insbesondere aus stangenförmigem Material, was dort eingeschoben wird :

## Patentansprüche

1. Übergang zwischen zwei gelenkig miteinander verbundenen Fahrzeugen eines schienengebundenen Gelenkfahrzeugs mit einer Gliederbrücke,
wobei die Gliederbrücke (1) abwechselnd angeordnete Tritt- und Gleitglieder aufweist, wobei die Gleitglieder aus einem Hartkunststoff herstellbar sind und die Trittglieder aus einem metallischen Werkstoff bestehen **dadurch gekennzeichnet, dass** die Trittglieder auf der Unterseite Taschen (10a) aufweisen, wobei plattenförmige Elemente aus Flammschutzmittel vorgesehen sind, die durch die Taschen (10) einschiebbar aufnehmbar sind.

2. Übergang zwischen zwei gelenkig miteinander verbundenen Fahrzeugen eines schienengebundenen Fahrzeugs mit einer Gliederbrücke nach Anspruch 1,
**dadurch gekennzeichnet,**
**dass** das Flammschutzmittel unter Wärmeeinwirkung sein Volumen vergrößert.

3. Übergang zwischen zwei gelenkig miteinander verbundenen Fahrzeugen eines schienengebundenen Fahrzeugs mit einer Gliederbrücke nach Anspruch 1,
**dadurch gekennzeichnet,**
**dass** das Flammschutzmittel unter Wärmeeinwirkung wasserabspaltend ist.

4. Übergang zwischen zwei gelenkig miteinander verbundenen Fahrzeugen eines schienengebundenen Fahrzeugs mit einer Gliederbrücke nach Anspruch 1 ,
**dadurch gekennzeichnet,**
**dass** als Flammschutzmittel Wasserglas verwendet wird.

5. Übergang zwischen zwei gelenkig miteinander verbundenen Fahrzeugen eines schienengebundenen Fahrzeugs mit einer Gliederbrücke nach Anspruch 1,
**dadurch gekennzeichnet,**
**dass** das Flammschutzmittel auf der Basis von Ammoniumpolyphosphaten und/oder Dizyanamiden herstellbar ist.

6. Übergang zwischen zwei gelenkig miteinander verbundenen Fahrzeugen eines schienengebundenen Fahrzeugs mit einer Gliederbrücke nach Anspruch 1,
**dadurch gekennzeichnet,**
**dass** die Trittglieder (10) im Querschnitt nach Art eines Doppel-T-Profils ausgebildet sind, wobei die Trittglieder auch am Steg (13) Taschen (14) zur Aufnahme von Flammschutzmitteln aufweisen.

## Claims

1. Transition between two pivotably interconnected vehicles of a rail articulated vehicle with an articulated bridge, wherein the articulated bridge (1) has alternately arranged tread elements and slide elements, wherein the slide elements are producible from a hard plastics material and the tread elements consist of a metallic material, **characterised in that** the tread elements have pockets (10a) on the underside, wherein plate-shaped elements of flame-retardant means, which are receivable by the pockets (10) by being pushed in, are provided.

2. Transition between two pivotably interconnected vehicles of a rail vehicle with an articulated bridge according to claim 1, **characterised in that** the flame-retardant means increases its volume under the action of heat.

3. Transition between two pivotably interconnected vehicles of a rail vehicle with an articulated bridge according to claim 1, **characterised in that** the flame-retardant means is dehydrating under the action of heat.

4. Transition between two pivotably interconnected vehicles of a rail vehicle with an articulated bridge according to claim 1, **characterised in that** water-glass is used as flame-retardant means.

5. Transition between two pivotably interconnected vehicles of a rail vehicle with an articulated bridge according to claim 1, **characterised in that** the flame-retardant means is producible on the basis of ammonium polyphosphates and/or dicyanamides.

6. Transition between two pivotably interconnected vehicles of a rail vehicle with an articulated bridge according to claim 1, **characterised in that** the tread elements (10) are constructed in cross-section in the form of a double-T-section, wherein the tread elements also have pockets (14) at the web (13) for reception of flame-retardant means.

## Revendications

1. Intercommunication entre deux véhicules reliés entre eux de façon articulée et appartenant à un véhicule articulé roulant sur rails, comportant une passerelle articulée, dans laquelle la passerelle articulée (1) comporte des éléments praticables et des éléments coulissants disposés en alternance, les éléments coulissants pouvant être fabriqués en une matière plastique dure et les éléments praticables en une matière métallique,
**caractérisée en ce que**
les éléments praticables comportent des poches (10a) sur la face inférieure, des éléments en forme de plaque réalisés en une substance pare-feu pouvant être introduits dans les poches (10) par emmanchement.

2. Intercommunication entre deux véhicules reliés entre eux de façon articulée et appartenant à un véhicule articulé roulant sur rails, comportant une passerelle articulée selon la revendication 1,
**caractérisée en ce que**
la substance pare-feu augmente de volume sous l'action de la chaleur.

3. Intercommunication entre deux véhicules reliés entre eux de façon articulée et appartenant à un véhicule articulé roulant sur rails, comportant une passerelle articulée selon la revendication 1,
**caractérisée en ce que**
la substance pare-feu élimine de l'eau sous l'effet de la chaleur.

4. Intercommunication entre deux véhicules reliés entre eux de façon articulée et appartenant à un véhicule articulé roulant sur rails, comportant une passerelle articulée selon la revendication 1,
**caractérisée en ce que**
du verre soluble est utilisé en tant que substance pare-feu.

5. Intercommunication entre deux véhicules reliés entre eux de façon articulée et appartenant à un véhicule articulé roulant sur rails, comportant une passerelle articulée selon la revendication 1,
**caractérisée en ce que**
la substance pare-feu peut être fabriquée à base de polyphosphates d'ammonium et/ou de dicyanamides.

6. Intercommunication entre deux véhicules reliés entre eux de façon articulée et appartenant à un véhicule articulé roulant sur rails, comportant une passerelle articulée selon la revendication 1,
**caractérisée en ce que**
les éléments praticables (10) présentent en section transversale la forme d'un profilé à double T, les éléments praticables comportant aussi des poches (14) attachées à l'âme (13) et destinées à recevoir des substances pare-feu.
